# EUROPEAN PATENT SPECIFICATION

(11) **EP 3 185 525 B1**
(45) Date of publication and mention of the grant of the patent: **03.11.2021**
(21) Application number: 14881934.5
(22) Date of filing: 25.11.2014
(51) Int. Cl.: H04M 3/56, H04M 3/00

(54) **ACCESS CONTROL PROCESSING METHOD AND DEVICE, AND DIGITAL SUBSCRIBER LINE ACCESS MULTIPLEXER**
ZUGANGSSTEUERUNGSVERARBEITUNGSVERFAHREN UND -VORRICHTUNG SOWIE DIGITALER TEILNEHMERLEITUNGSZUGANGSMULTIPLEXER
PROCÉDÉ ET DISPOSITIF DE TRAITEMENT DE CONTRÔLE D'ACCÈS, ET MULTIPLEXEUR D'ACCÈS À UNE LIGNE D'ABONNÉ NUMÉRIQUE

(30) Priority: 21.08.2014 CN 201410416299
(43) Date of publication of application: 28.06.2017
(73) Proprietor: ZTE Corporation, Shenzhen, Guangdong 518057 (CN)
(72) Inventor: WU, Zhou, Shenzhen Guangdong 518057 (CN)
(74) Representative: Wallinger Ricker Schlotter Tostmann
(86) International application number: PCT/CN2014/092187
(87) International publication number: WO 2015/117473

(56) References cited:
- WO-A1-2006/048770
- CN-A- 101 123 652
- CN-A- 101 483 906
- CN-A- 101 971 579
- CN-A- 102 118 534
- US-A1- 2011 051 906
- Itu-T: "ITU-T Handshake procedures for digital subscriber line transceivers, G.994.1", , 13 June 2012 (2012-06-13), XP055390677, Retrieved from the Internet: URL:http://www.itu.int/rec/T-REC-G.994.1-2 01206-I [retrieved on 2017-07-13]
- None

## Description

### Technical field

The disclosure relates to the field of sub-communication, and in particular to a method and device for processing access control, and a digital subscriber line access multiplexer.

### Background

With a rapid development and popularity of an Internet, some hotspot applications such as Intelligent Personal Television (IPTV), Voice over Internet Protocol (VOIP), video surveillance, video conference, high-speed Internet access and other value-added services are developed continuously, and personal and business users have a growing demand for the broadband access. In current several broadband access technologies, x digital subscriber line (xDSL) (xDSL is a general term for a variety of Digital Subscriber Lines (hereinafter referred to as DSL), in which x represents any character or string) technology enables users to enjoy stabile bandwidth exclusivity, has a good confidentiality and maturing performance, and becomes mainstream means for a broadband to access because this technology can take full advantage of existing copper resources. Digital Subscriber Line Access Multiplexer (hereinafter referred to as DSLAM) is an office end access device of the xDSL. A client access device of the xDSL is referred to as a Modem.

There are many manufacturers to manufacture Modems on a market today. Because the Modem is place at home of users and the users can freely replace the Modem, which will bring a series of problems. For example, in a Very High Bit-Rate Digital Subscriber Line (referred to as VDSL) dynamic spectrum management system, if a user changes to use a Modem that does not support dynamic spectrum management, this action will have an interference effect in spectrum on other users, and a frequency of the Modem must be fallen. As another example, taking into account security and user unified management (such as remote Modem configuration, version remote upgrade) and other aspects, it is necessary for some operators to prevent a Modem that has not been authenticated by operators from accessing a network for use.

At present, a method for user control on the DSLAM in related art is to control the Modem based on a service level. However, for users who do not have access by operators, at least one port will be closed so as to not allow users to establish a link; or the users will not be configured on a level of switching and forwarding by an office end, so that even though a link is established, the link cannot be used normally.

In view of a problem in related art of a situation in which the Modem cannot be used normally because the Modem is controlled based on a service level, no effective solution has been proposed yet.

Document US 2011/051906 A1 relates to adaptive control of various transmission parameters in communication systems such as Digital Subscriber Line (DSL) systems.

Document WO 2006/048770 A1 provides a method of identifying types of modems or other communication devices used in a communication system such as an ADSL system.

### Summary

The embodiments of the disclosure provides a method and device according to respective claims 1 and 6 for access control processing and a DSLAM according to claim 11 so as to solve a problem that access devices cannot be used normally for users who do not have access by operators or who will not be configured on a level of switching and forwarding by office ends.

In an embodiment of the disclosure, a method for processing access control is provided, including: establishing a corresponding relationship between a type of a Modem and an access strategy for the Modem to access a network; identifying the type of the Modem which requests to access the network; determining the access strategy for the Modem to access the network according to the identified type of the Modem and the corresponding relationship; and controlling the Modem to access the network according to the determined access strategy.

In an example embodiment, the access strategy includes at least one of: falling a frequency of the Modem to a preset frequency, in a case that the type of the Modem is a Modem which does not support dynamic spectrum management; establishing a link for the Modem, in a case that the type of the Modem is the Modem which is allowed to access the network; and prohibiting the Modem from establishing a link, in a case that the type of the Modem is the Modem which is restricted to access the network.

In an example embodiment, the preset frequency is 2.2 MHz.

In an example embodiment, controlling the Modem to access the network according to the determined access strategy includes at least one of: falling a frequency of the Modem to a preset frequency, in a case that the determined access strategy is to fall the frequency of the Modem to the preset frequency; establishing a link for the Modem in a case that the determined access strategy is to establish the link for the Modem; and prohibiting the Modem from establishing a link in a case that the determined access strategy is to prohibit the Modem from establishing the link.

In an example embodiment, identifying the type of the Modem which requests to access to the network includes: collecting an interactive message that a user terminal and an office end terminal establish a link in a Digital Subscriber Line (DSL) through at least one interactive handshake, wherein the interactive message carries the type of the Modem of the user terminal; and identifying the type of the Modem from the interactive message.

In an example embodiment, determining the access strategy for the Modem to access the network according to the identified type of the Modem and the corresponding relationship includes: determining that the access strategy of the Modem to access the network is to prohibit the Modem from establishing a link, in a case that the identified type of the Modem does not have a corresponding access strategy.

In another embodiment of the disclosure, a device for processing access control is provided, including: an establishing component, arranged to establish a corresponding relationship between a type of a Modem and an access strategy for the Modem to access a network; an identifying component, arranged to identify the type of the Modem which requests to access the network; a determining component, arranged to determine the access strategy for the Modem to access the network according to the identified type of the Modem and the corresponding relationship; and an accessing component, arranged to control the Modem to access the network according to the determined access strategy.

In an example embodiment, the establishing component includes: a first establishing element, arranged to establish the access strategy corresponding to the type of the Modem as: falling a frequency of the Modem to a preset frequency, in a case that the type of the Modem is a Modem which does not support dynamic spectrum management; a second establishing element, arranged to establish the access strategy corresponding to the type of the Modem as: establishing a link for the Modem, in a case that the type of the Modem is the Modem which is allowed to access the network; and a third establishing element, arranged to establish the access strategy corresponding to the type of the Modem as: prohibiting the Modem from establishing a link, in a case that the type of the Modem is the Modem which is restricted to access the network.

In an example embodiment, the preset frequency is 2.2 MHz.

In an example embodiment, the accessing component is further arranged to: fall a frequency of the Modem to a preset frequency, in a case that the determined access strategy is to fall the frequency of the Modem to the preset frequency; establish a link for the Modem, in a case that the determined access strategy is to establish the link for the Modem; and prohibit the Modem from establishing a link, in a case that the determined access strategy is to prohibit the Modem from establishing the link.

In an example embodiment, the identifying component includes: a collecting element, arranged to collect an interactive message that a user terminal and an office end terminal establish a link in a Digital Subscriber Line (DSL) through at least one interactive handshake, wherein the interactive message carries the type of the Modem of the user terminal; and an identifying element, arranged to identify the type of the Modem from the interactive message.

In an example embodiment, the determining component includes: a determining element, arranged to determine that the access strategy of the Modem to access the network is to prohibit the Modem from establishing a link, in a case that the identified type of the Modem does not have a corresponding access strategy.

In another embodiment of the disclosure, a DSLAM is provided, including the above-mentioned device for processing access control.

According to the method provided in the disclosure, with the means in which the corresponding relationship between the type of the Modem and the access strategy for the Modem to access the network is established; the type of the Modem which requests to access the network is identified; the access strategy for the Modem to access the network is determined according to the identified type of the Modem and the corresponding relationship; and the Modem to access the network is controlled according to the determined access strategy, the problem in related art of a situation is solved in which the Modem cannot be used normally because the Modem is controlled based on a service level, so that accesses of different types of Modems can be controlled according to the established strategy.

### Brief description of the drawings

The drawings described herein are intended to provide a further understanding of the disclosure and form a part of the application. The illustrative embodiments of the disclosure and the description of the disclosure are illustrative of the disclosure and are not to be construed as limiting the disclosure. In the drawings:
Fig. 1 is a flowchart of a method for processing access control according to an embodiment of the disclosure;
Fig. 2 is a structural schematic diagram of a device for processing access control according to an embodiment of the disclosure;
Fig. 3 is a schematic diagram of a Modem access control networking according to an example embodiment of the disclosure; and
Fig. 4 is a flowchart of a method for processing Modem access control according to an example embodiment of the disclosure.

### Detailed description

Hereinafter, the disclosure will be described in detail with reference to the accompanying drawings and in combination with embodiments. It needs to be noted that, in a case of no conflict, the embodiments of the present application and the features of the embodiments may be combined with each other.

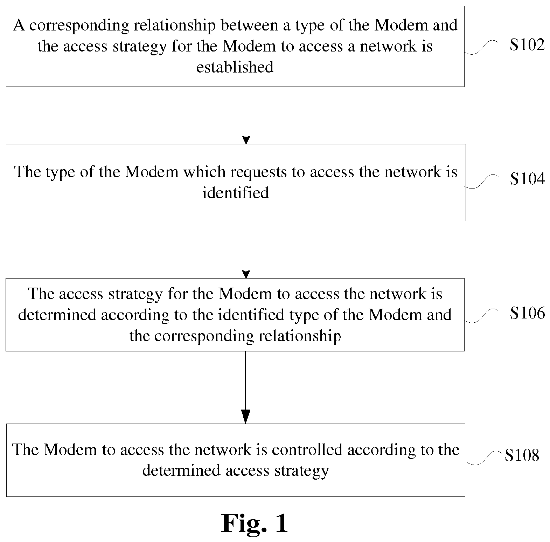

In an embodiment of the disclosure, a method for processing access control is provided. Fig. 1 is a flowchart of a method for processing access control according to an embodiment of the disclosure. As shown in Fig. 1, the process includes the following steps.

Step S102: A corresponding relationship between a type of the Modem and the access strategy for the Modem to access a network is established.

Step S104: The type of the Modem which requests to access the network is identified.

Step S106: The access strategy for the Modem to access the network is determined according to the identified type of the Modem and the corresponding relationship.

Step S108: The Modem to access the network is controlled according to the determined access strategy.

According to the embodiment of the disclosure, with the means in which the corresponding relationship between the type of the Modem and the access strategy for the Modem to access the network is established; the type of the Modem which requests to access the network is identified; the access strategy for the Modem to access the network is determined according to the identified type of the Modem and the corresponding relationship; and the Modem to access the network is controlled according to the determined access strategy, the problem in related art of a situation is solved in which the Modem cannot be used normally because the Modem is controlled based on a service level, so that accesses of different types of Modems can be controlled according to the established strategy.

In an example embodiment, establishing the corresponding relationship between the type of the Modem and the access strategy for the Modem to access a network includes at least one of: falling a frequency of the Modem to a preset frequency, in a case that the type of the Modem is a Modem which does not support dynamic spectrum management; establishing a link for the Modem, in a case that the type of the Modem is the Modem which is allowed to access the network; and prohibiting the Modem from establishing a link, in a case that the type of the Modem is the Modem which is restricted to access the network.

In an example embodiment, the preset frequency is 2.2 MHz.

In an example embodiment, controlling the Modem to access the network according to the determined access strategy includes at least one of: falling a frequency of the Modem to a preset frequency, in a case that the determined access strategy is to fall the frequency of the Modem to the preset frequency; establishing a link for the Modem, in a case that the determined access strategy is to establish the link for the Modem; and prohibiting the Modem from establishing a link, in a case that the determined access strategy is to prohibit the Modem from establishing the link.

In an example embodiment, identifying the type of the Modem which requests access to the network includes: collecting an interactive message that a user terminal and an office end terminal establish the link in the DSL through at least one interactive handshake, moreover the interactive message carries the type of the Modem of the user terminal; and identifying the type of the Modem from the interactive message.

In an example embodiment, determining the access strategy for the Modem to access the network according to the identified type of the Modem and the corresponding relationship includes: determining that the access strategy of the Modem to access the network is to prohibit the Modem from establishing a link, in a case that the identified type of the Modem does not have a corresponding access strategy.

In another embodiment, there is also provided a device for processing access control for implementing the abovementioned embodiments and example embodiments. The embodiments which have been described will not be described in detail. As used below, the term "component" may implement a combination of at least one of software and hardware of a predetermined function. Although the device described in the following embodiments is implemented in software, implementations of hardware, or a combination of software and hardware, are also possible and contemplated.

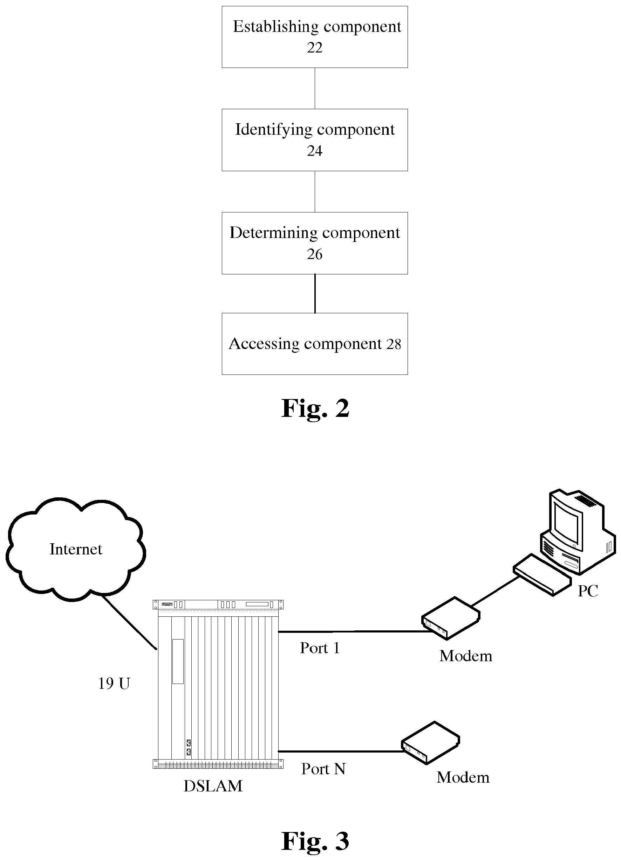

Fig. 2 is a structural schematic diagram of a device for processing access control according to an embodiment of the disclosure. As shown in Fig. 2, the device includes: an establishing component 22, arranged to establish a corresponding relationship between a type of a Modem and an access strategy for the Modem to access a network; an identifying component 24, arranged to identify the type of the Modem which requests to access the network; a determining component 26, arranged to determine the access strategy for the Modem to access the network according to the identified type of the Modem and the corresponding relationship; and an accessing component 28, arranged to control the Modem to access the network according to the determined access strategy.

In an example embodiment, the establishing component includes: a first establishing element, arranged to establish the access strategy corresponding to the type of the Modem as: falling a frequency of the Modem to a preset frequency, in a case that the type of the Modem is a Modem which does not support dynamic spectrum management; a second establishing element, arranged to establish the access strategy corresponding to the type of the Modem as: establishing a link for the Modem, in a case that the type of the Modem is the Modem which is allowed to access the network; and a third establishing element, arranged to establish the access strategy corresponding to the type of the Modem as: prohibiting the Modem from establishing a link, in a case that the type of the Modem is the Modem which is restricted to access the network.

In an example embodiment, the preset frequency is 2.2 MHz.

In an example embodiment, the accessing component is further arranged to: fall a frequency of the Modem to a preset frequency, in a case that the determined access strategy is to fall the frequency of the Modem to the preset frequency; establish a link for the Modem, in a case that the determined access strategy is to establish a link for the Modem; and prohibit the Modem from establishing a link, in a case that the determined access strategy is to prohibit the Modem from establishing the link.

In an example embodiment, the identifying component includes: a collecting element, arranged to collect an interactive message that a user terminal and an office end terminal establish a link in the DSL through at least one interactive handshake, moreover the interactive message carries the type of the Modem of the user terminal; and an identifying element, arranged to identify the type of the Modem from the interactive message.

In an example embodiment, the determining component includes: a determining element, arranged to determine that the access strategy of the Modem to access the network is to prohibit the Modem from establishing a link, in a case that the identified type of the Modem does not have a corresponding access strategy.

In another embodiment, there is also provided a DSLAM, including the above-mentioned device for processing access control.

In order to better describe the above-mentioned embodiments of the disclosure, it will be described below in combination with the example embodiments of the disclosure.

The inventive idea of an example embodiment of the disclosure is to provide a method for identifying the type of the Modem on the DSLAM according to a field associated with Modem information collected by a user terminal and an office end terminal in a process (G994.1) of establishing a link in the DSL through at least one interactive handshake and controlling accesses of different types of Modems according to the established strategy. The field associated with the Modem information collected in the process (G994.1) of establishing a link in the DSL through at least one interactive handshake includes: vendorid Id information block (country code\provider code\vendor specific information).

Fig. 3 is a schematic diagram of a Modem access control networking according to an example embodiment of the disclosure. As shown in Fig. 3, the example embodiment of the disclosure adopts the following technical solution of: identification information of a Modem to be controlled for access is determined; access control strategies of different types of Modems is determined; Modem information is collected to identify the type of the Modem in a process of at least one handshake between the Modem and the office end; and a subsequent link establishment processing process of the Modem is controlled according to the determined access control strategy.

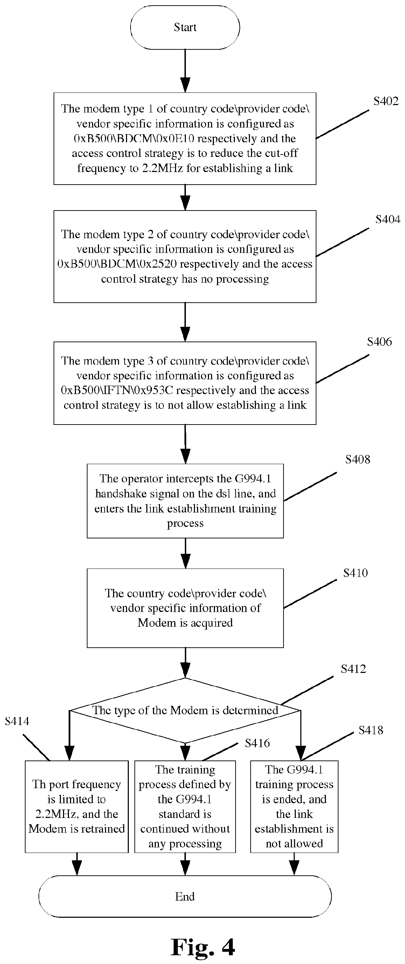

The example embodiments of the disclosure will now be described in greater detail with reference to the accompanying drawings. Fig. 4 is a flowchart of a method for processing Modem access control according to an example embodiment of the disclosure. As shown in Fig. 4, the method includes the following steps.

Step S402: The modem with a field value 0xB500\BDCM\0x0F10 of country code\provider code\vendor specific information is configured as Modem type 1 and the access control strategy is to reduce the cut-off frequency to 2.2MHz for establishing a link.

Step S404: The modem with the field value 0xB500\BDCM\0x2520 of country code\provider code\vendor specific information is configured as Modem type 2 and the access control strategy has no processing.

Step S406: The modem with the field value 0xB500\IFTN\0x953C of country code\provider code\vendor specific information is configured as Modem type 3 and the access control strategy is to not allow establishing a link.

Step S408: The office end intercepts the G994.1 handshake signal on a DSL line, and enters a link establishment training process.

Step S410: The country code\provider code\vendor specific information of Modem is acquired from the G994.1 handshake process.

Step S412: The type of the Modem is determined in comparison with the configured type of the Modem.

Step S414: The type of the Modem is 1, the port frequency is limited to 2.2MHz, and the Modem is retrained.

Step S416: The type of the Modem is 2, and the training process defined by the G994.1 standard is continued without any processing.

Step S418: The type of the Modem is 3, the G994.1 training process is ended, and the link establishment is not allowed; if the Modem is not type 1, 2, 3, the G994.1 training process is ended, and the link establishment is not allowed.

According to the example embodiment of the disclosure, the type of the Modem is identified according to a field associated with the Modem information collected by the user terminal and the office end terminal in the process (G994.1) of establishing a link in the DSL through the at least one interactive handshake and the accesses of different types of Modems is controlled according to the established strategy. The field associated with the Modem information collected in the process (G994.1) of establishing the link in the DSL through the at least one interactive handshake includes: vendorid Id information block (country code\provider code\vendor specific information).

The above is only the example embodiments of the disclosure and not intended to limit the scope of the disclosure which is defined by the subject matter of the independent claims. Preferred embodiments are defined by the dependent claims.

### Industrial Applicability

According to the abovementioned technical solution provided by the embodiments of the disclosure, with the means in which the corresponding relationship between the type of the Modem and an access strategy for the Modem to access a network is established; the type of the Modem which requests to access the network is identified; the access strategy for the Modem to access the network is determined according to the identified type of the Modem and the corresponding relationship; and the Modem to access the network is controlled according to the determined access strategy, the problem in related art of a situation is solved in which the Modem cannot be used normally because the Modem is controlled based on a service level, so that accesses of different types of Modems can be controlled according to the established strategy.

## Claims

1. A method for processing access control, comprising:
establishing a corresponding relationship between a type of a Modem and an access strategy for the Modem to access a network (S102);
identifying the type of the Modem which requests to access the network during at least one interactive handshake with the modem (S104);
determining the access strategy for the Modem to access the network according to the identified type of the Modem and the corresponding relationship (S106); and controlling the Modem to access the network according to the determined access strategy (S108);
**characterized in that** the access strategy comprises at least one of:
reducing a cut-off frequency of the Modem to a preset frequency for establishing a link, in a case that the type of the Modem is a Modem which does not support dynamic spectrum management;
establishing a link for the Modem, in a case that the type of the Modem is the Modem which is allowed to access the network; and
prohibiting the Modem from establishing a link, in a case that the type of the Modem is the Modem which is restricted to access the network.

2. The method as claimed in claim 1, wherein the preset frequency is 2.2 MHz.

3. The method as claimed in claim 1, wherein controlling the Modem to access the network according to the determined access strategy (S108) comprises at least one of:
reducing the cut-off frequency of the Modem to the preset frequency, in a case that the determined access strategy is to reduce the cut-off frequency of the Modem to the preset frequency for establishing the link;
establishing a link for the Modem in a case that the determined access strategy is to establish the link for the Modem; and
prohibiting the Modem from establishing a link in a case that the determined access strategy is to prohibit the Modem from establishing the link.

4. The method as claimed in claim 1, wherein identifying the type of the Modem which requests to access to the network (S104) comprises:
collecting an interactive message that a user terminal and an office end terminal establish a link in a Digital Subscriber Line, DSL, through at least one interactive handshake, wherein the interactive message carries the type of the Modem of the user terminal; and
identifying the type of the Modem from the interactive message.

5. The method as claimed in claim 1, wherein determining the access strategy for the Modem to access the network according to the identified type of the Modem and the corresponding relationship (S106) comprises:
determining that the access strategy of the Modem to access the network is to prohibit the Modem from establishing a link, in a case that the identified type of the Modem does not have a corresponding access strategy.

6. A device for processing access control, comprising:
an establishing component (22), arranged to establish a corresponding relationship between a type of a Modem and an access strategy for the Modem to access a network;
an identifying component (24), arranged to identify the type of the Modem which requests to access the network during at least one interactive handshake with the modem;
a determining component (26), arranged to determine the access strategy for the Modem to access the network according to the identified type of the Modem and the corresponding relationship; and
an accessing component (28), arranged to control the Modem to access the network according to the determined access strategy;
**characterized in that** the establishing component (22) comprises:
a first establishing element, arranged to establish the access strategy corresponding to the type of the Modem as: reducing a cut-off frequency of the Modem to a preset frequency for establishing a link, in a case that the type of the Modem is a Modem which does not support dynamic spectrum management;
a second establishing element, arranged to establish the access strategy corresponding to the type of the Modem as: establishing a link for the Modem, in a case that the type of the Modem is the Modem which is allowed to access the network; and
a third establishing element, arranged to establish the access strategy corresponding to the type of the Modem as: prohibiting the Modem from establishing a link, in a case that the type of the Modem is the Modem which is restricted to access the network.

7. The device as claimed in claim 6, wherein the preset frequency is 2.2 MHz.

8. The device as claimed in claim 6, wherein the accessing component (28) is further arranged to:
reduce the cut-off frequency of the Modem to the preset frequency, in a case that the determined access strategy is to reduce the cut-off frequency of the Modem to the preset frequency for establishing the link;
establish a link for the Modem, in a case that the determined access strategy is to establish the link for the Modem; and
prohibit the Modem from establishing a link, in a case that the determined access strategy is to prohibit the Modem from establishing the link.

9. The device as claimed in claim 6, wherein the identifying component (24) comprises:
a collecting element, arranged to collect an interactive message that a user terminal and an office end terminal establish a link in a Digital Subscriber Line, DSL, through at least one interactive handshake, wherein the interactive message carries the type of the Modem of the user terminal; and
an identifying element, arranged to identify the type of the Modem from the interactive message.

10. The device as claimed in claim 6, wherein the determining component (26) comprises:
a determining element, arranged to determine that the access strategy of the Modem to access the network is to prohibit the Modem from establishing a link, in a case that the identified type of the Modem does not have a corresponding access strategy.

11. A Digital Subscriber Line Access Multiplexer, DSLAM, comprising the device as claimed in any one of claims 6 to 10.

## Patentansprüche

1. Verfahren zum Verarbeiten einer Zugriffssteuerung, welches umfasst:
ein Herstellen einer entsprechenden Beziehung zwischen einer Art eines Modems und einer Zugriffsstrategie für das Modem, um auf ein Netzwerk zuzugreifen (S102);
ein Identifizieren der Art des Modems, das während mindestens eines interaktiven Handshakes mit dem Modem einen Zugriff auf das Netzwerk anfordert (S104);
ein Bestimmen der Zugriffsstrategie für das Modem, um gemäß der identifizierten Art des Modems und der entsprechenden Beziehung auf das Netzwerk zuzugreifen (S106); und
ein Steuern des Modems, um gemäß der bestimmten Zugriffsstrategie auf das Netzwerk zuzugreifen (S108);
**dadurch gekennzeichnet, dass** die Zugriffsstrategie mindestens eines der folgenden umfasst:
ein Verringern einer Grenzfrequenz des Modems auf eine voreingestellte Frequenz zum Herstellen einer Verbindung, für den Fall, dass die Art des Modems ein solches Modem ist, das keine dynamische Spektrumsverwaltung unterstützt;
ein Herstellen einer Verbindung für das Modem, für den Fall, dass die Art des Modems ein solches Modem ist, das auf das Netzwerk zugreifen darf; und
ein Verbieten, dass das Modem eine Verbindung aufbaut, für den Fall, dass die Art des Modems ein solches Modem ist, das davon eingeschränkt ist, auf das Netzwerk zuzugreifen.

2. Verfahren nach Anspruch 1, wobei die voreingestellte Frequenz 2,2 MHz beträgt.

3. Verfahren nach Anspruch 1, wobei ein Steuern des Modems zum Zugreifen auf das Netzwerk gemäß der bestimmten Zugriffsstrategie (S108) mindestens eines der folgenden umfasst:
ein Verringern der Grenzfrequenz des Modems auf die voreingestellte Frequenz, für den Fall, dass die bestimmte Zugriffsstrategie darin besteht, die Grenzfrequenz des Modems auf die voreingestellte Frequenz zum Herstellen der Verbindung zu verringern;
ein Einrichten einer Verbindung für das Modem in einem Fall, bei dem die bestimmte Zugriffsstrategie darin besteht, die Verbindung für das Modem aufzubauen; und
ein Verbieten, dass das Modem eine Verbindung aufbaut, falls die festgelegte Zugriffsstrategie darin besteht, das Modem daran zu hindern, die Verbindung aufzubauen.

4. Verfahren nach Anspruch 1, wobei das Identifizieren der Art des Modems, das den Zugriff auf das Netzwerk anfordert (S104), umfasst:
ein Sammeln einer interaktiven Nachricht, dass ein Benutzerendgerät und ein Büroendgerät eine Verbindung in einer digitalen Teilnehmerleitung, DSL, durch mindestens einen interaktiven Handshake herstellt, wobei die interaktive Nachricht die Art des Modems des Benutzerendgeräts trägt; und
ein Identifizieren der Art des Modems aus der interaktiven Nachricht.

5. Verfahren nach Anspruch 1, wobei das Bestimmen der Zugriffsstrategie für das Modem zum Zugreifen auf das Netzwerk gemäß der identifizierten Art des Modems und der entsprechenden Beziehung (S106) umfasst:
ein Bestimmen, dass die Zugriffsstrategie des Modems zum Zugreifen auf das Netzwerk darin besteht, das Modem daran zu hindern, eine Verbindung aufzubauen, für den Fall, dass die identifizierte Art des Modems keine entsprechende Zugriffsstrategie hat.

6. Vorrichtung zur Verarbeitung einer Zugangssteuerung, welche aufweist:
eine Einrichtungskomponente (22), die ausgestaltet ist, um eine entsprechende Beziehung zwischen einer Art eines Modems und einer Zugriffsstrategie für das Modem herzustellen, um auf ein Netzwerk zuzugreifen;
eine Identifizierungskomponente (24), die ausgestaltet ist, um die Art des Modems zu identifizieren, das während mindestens eines interaktiven Handshakes mit dem Modem den Zugriff auf das Netzwerk anfordert;
eine Bestimmungskomponente (26), die ausgestaltet ist, um die Zugriffsstrategie für das Modem zu bestimmen, um gemäß dem identifizierten Typ des Modems und der entsprechenden Beziehung auf das Netzwerk zuzugreifen; und
eine Zugriffskomponente (28), die ausgestaltet ist, um das Modem so zu steuern, um gemäß der bestimmten Zugriffsstrategie auf das Netzwerk zuzugreifen;
**dadurch gekennzeichnet, dass** die Einrichtungskomponente (22) aufweist:
ein erstes Einrichtungselement, das ausgestaltet ist, um die Zugriffsstrategie, die der Art des Modems entspricht, einzurichten: als ein Verringern einer Grenzfrequenz des Modems auf eine voreingestellte Frequenz zum Herstellen einer Verbindung, für den Fall, dass die Art des Modems ein solches Modem ist, das keine dynamische Spektrumsverwaltung unterstützt;
ein zweites Einrichtungselement, das ausgestaltet ist, um die Zugriffsstrategie, die der Art des Modems entspricht, einzurichten: als ein Einrichten einer Verbindung für das Modem, für den Fall, dass die Art des Modems ein solches Modem ist, das auf das Netzwerk zugreifen darf; und
ein drittes Einrichtungselement, das ausgestaltet ist, um die Zugriffsstrategie, die der Art des Modems entspricht, einzurichten: als ein Verbieten, dass das Modem eine Verbindung aufbaut, für den Fall, dass die Art des Modems ein solches Modem ist, das begrenzt ist, auf das Netzwerk zuzugreifen.

7. Vorrichtung nach Anspruch 6, wobei die voreingestellte Frequenz 2,2 MHz beträgt.

8. Vorrichtung nach Anspruch 6, wobei die Zugriffskomponente (28) ferner ausgestaltet ist,
um die Grenzfrequenz des Modems auf die voreingestellte Frequenz zu verringern, für den Fall, dass die bestimmte Zugriffsstrategie darin besteht, die Grenzfrequenz des Modems auf die voreingestellte Frequenz zum Herstellen der Verbindung zu verringern;
um eine Verbindung für das Modem herstellen, für den Fall, dass die festgelegte Zugriffsstrategie darin besteht, die Verbindung für das Modem aufzubauen; und
um das Modem daran hindern, eine Verbindung aufzubauen, für den Fall, dass die bestimmte Zugriffsstrategie darin besteht, das Modem daran zu hindern, die Verbindung aufzubauen.

9. Vorrichtung nach Anspruch 6, wobei die Identifizierungskomponente (24) aufweist:
ein Sammelelement, das ausgestaltet ist, um eine interaktive Nachricht zu sammeln, dass ein Benutzerendgerät und ein Büroendgerät eine Verbindung in einer digitalen Teilnehmerleitung, DSL, durch mindestens einen interaktiven Handshake herstellen, wobei die interaktive Nachricht die Art des Modems des Benutzerendgeräts trägt; und
ein Identifizierungselement, das ausgestaltet ist, um die Art des Modems aus der interaktiven Nachricht zu identifizieren.

10. Vorrichtung nach Anspruch 6, wobei die Bestimmungskomponente (26) aufweist:
ein Bestimmungselement, das ausgestaltet ist, um zu bestimmen, dass die Zugriffsstrategie des Modems zum Zugreifen auf das Netzwerk darin besteht, das Modem daran zu hindern, eine Verbindung aufzubauen, für den Fall, dass die identifizierte Art des Modems keine entsprechende Zugriffsstrategie hat.

11. Zugriffsmultiplexer für digitale Teilnehmerleitungen, DSLAM, welcher die Vorrichtung nach einem der Ansprüche 6 bis 10 aufweist.

## Revendications

1. Procédé pour le traitement de contrôle d'accès, comprenant :
l'établissement d'une relation correspondante entre un type d'un Modem et une stratégie d'accès pour que le Modem accède à un réseau (S102) ;
l'identification du type du Modem qui demande l'accès au réseau pendant au moins une prise de contact interactive avec le modem (S104) ;
la détermination de la stratégie d'accès pour que le Modem accède au réseau selon le type identifié du Modem et la relation correspondante (S106) ; et la commande du Modem pour accéder au réseau selon la stratégie d'accès déterminée (S108) ;
**caractérisé en ce que** la stratégie d'accès comprend au moins un élément parmi : la réduction de la fréquence de coupure du Modem à une fréquence prédéfinie afin d'établir une liaison, dans un cas où le type du Modem est un Modem qui ne prend pas en charge la gestion dynamique du spectre ;
l'établissement d'une liaison pour le Modem, dans un cas où le type du Modem est le Modem qui est autorisé à accéder au réseau ; et
l'interdiction au Modem d'établir une liaison, dans un cas où le type du Modem est le Modem qui a un accès restreint au réseau.

2. Procédé selon la revendication 1, dans lequel la fréquence prédéfinie est de 2,2 MHz.

3. Procédé selon la revendication 1, dans lequel la commande du Modem pour accéder au réseau selon la stratégie d'accès déterminée (S108) comprend au moins un élément parmi :
la réduction de la fréquence de coupure du Modem à la fréquence prédéfinie, dans un cas où la stratégie d'accès déterminée est de réduire la fréquence de coupure du Modem à la fréquence prédéfinie pour établir la liaison ;
l'établissement d'une liaison pour le Modem dans un cas où la stratégie d'accès déterminée est d'établir la liaison pour le Modem ; et
l'interdiction au Modem d'établir une liaison dans un cas où la stratégie d'accès déterminée est d'interdire le Modem d'établir la liaison.

4. Procédé selon la revendication 1, dans lequel l'identification du type du Modem qui demande l'accès au réseau (S104) comprend :
la collecte d'un message interactif indiquant qu'un terminal utilisateur et un terminal côté central établissent une liaison dans une ligne d'abonné numérique, DSL, par l'intermédiaire d'au moins une prise de contact interactive, dans lequel le message interactif transporte le type du Modem du terminal utilisateur; et l'identification du type du Modem à partir du message interactif.

5. Procédé selon la revendication 1, dans lequel la détermination de la stratégie d'accès pour que le Modem accède au réseau selon le type identifié du Modem et la relation correspondante (S106) comprend :
la détermination que la stratégie d'accès du Modem pour accéder au réseau est d'interdire le Modem d'établir une liaison, dans un cas où le type identifié du Modem n'a pas une stratégie d'accès correspondante.

6. Dispositif pour le traitement de contrôle d'accès, comprenant :
un composant d'établissement (22) agencé pour établir une relation correspondante entre un type d'un Modem et une stratégie d'accès pour que le Modem accède à un réseau ;
un composant d'identification (24), agencé pour identifier le type du Modem qui demande l'accès au réseau pendant au moins une prise de contact interactive avec le modem ;
un composant de détermination (26), agencé pour déterminer la stratégie d'accès pour que le Modem accède au réseau selon le type identifié du Modem et la relation correspondante ; et
un composant d'accès (28), agencé pour commander le Modem pour accéder au réseau selon la stratégie d'accès déterminée ;
**caractérisé en ce que** le composant d'établissement (22) comprend : un premier élément d'établissement, agencé pour établir la stratégie d'accès correspondant au type du Modem comme : la réduction d'une fréquence de coupure du Modem à une fréquence prédéfinie afin d'établir une liaison, dans un cas où le type du Modem est un Modem qui ne prend pas en charge la gestion dynamique du spectre ;
un deuxième élément d'établissement, agencé pour établir la stratégie d'accès correspondant au type du Modem comme : l'établissement d'une liaison pour le Modem, dans un cas où le type du Modem est le Modem qui est autorisé à accéder au réseau ; et
un troisième élément d'établissement, agencé pour établir la stratégie d'accès correspondant au type du Modem comme : l'interdiction au Modem d'établir une liaison, dans un cas où le type du Modem est le Modem qui a un accès restreint au réseau.

7. Dispositif selon la revendication 6, dans lequel la fréquence prédéfinie est de 2,2 MHz.

8. Dispositif selon la revendication 6, dans lequel le composant d'accès (28) est en outre agencé pour :
réduire la fréquence de coupure du Modem à la fréquence prédéfinie, dans un cas où la stratégie d'accès déterminée est de réduire la fréquence de coupure du Modem à la fréquence prédéfinie pour établir la liaison ;
établir une liaison pour le Modem dans un cas où la stratégie d'accès déterminée est d'établir la liaison pour le Modem ; et
interdire le Modem d'établir une liaison dans un cas où la stratégie d'accès déterminée est d'interdire le Modem d'établir la liaison.

9. Dispositif selon la revendication 6, dans lequel le composant d'identification (24) comprend : un élément de collecte, agencé pour collecter un message interactif indiquant qu'un terminal utilisateur et un terminal côté central établissent une liaison dans une ligne d'abonné numérique, DSL, par l'intermédiaire d'au moins une prise de contact interactive, dans lequel le message interactif transporte le type du Modem du terminal utilisateur; et
un élément d'identification, agencé pour identifier le type du Modem à partir du message interactif.

10. Dispositif selon la revendication 6, dans lequel le composant de détermination (26) comprend : un élément de détermination, agencé pour déterminer que la stratégie d'accès du Modem pour accéder au réseau est d'interdire le Modem d'établir une liaison, dans un cas où le type identifié du Modem n'a pas une stratégie d'accès correspondante.

11. Multiplexeur d'accès de ligne d'abonné numérique, DSLAM, comprenant le dispositif selon l'une quelconque des revendications 6 à 10.
